**Europäisches Patentamt**

**European Patent Office**

**Office européen des brevets**

(19)

(11) Numéro de publication: **0 255 422**
**B1**

# FASCICULE DE BREVET EUROPEEN

(12)

(45) Date de publication du fascicule du brevet:
**24.10.90**

(51) Int. Cl.⁵: **C03B 23/035**, C03B 23/025

(21) Numéro de dépôt: **87401638.9**

(22) Date de dépôt: **10.07.87**

(54) Perfectionnement au bombage de plaques de verre.

(30) Priorité: **16.07.86 FR 8610330**

(43) Date de publication de la demande:
**03.02.88 Bulletin 88/5**

(45) Mention de la délivrance du brevet:
**24.10.90 Bulletin 90/43**

(84) Etats contractants désignés:
**BE CH DE ES FR GB IT LI SE**

(56) Documents cités:
**EP-A- 0 005 306**
**EP-A- 0 139 524**
**EP-A- 0 169 770**
**FR-A- 2 085 464**
**US-A- 4 386 952**

(73) Titulaire: **SAINT-GOBAIN VITRAGE INTERNATIONAL,
18, avenue d'Alsace, F-92400 Courbevoie(FR)**

(72) Inventeur: **Vanaschen, Luc, Binsterweg 113,
B-4700 Eupen(BE)**
Inventeur: **Boutier, Philippe, 8, Route Nationale,
F-60150 Thourotte(FR)**

(74) Mandataire: **Leconte, Jean-Gérard et al, SAINT-GOBAIN
VITRAGE 39, Quai Lucien Lefranc,
F-93300 AUBERVILLIERS(FR)**

## Description

La présente invention se rapporte au bombage de plaques de verre disponibles sur un support horizontal ou approximativement horizontal, par exemple un convoyeur d'amenée, ce bombage s'effectuant par application des plaques portées à leur température de ramollissement contre une forme supérieure, puis éventuellement par affaissement desdites plaques sous l'effet de la gravité sur une forme inférieure après leur dépôt sur ladite forme inférieure, cette forme inférieure étant généralement constituée par un anneau à profil courbe ouvert en son centre, encore appelé cadre de bombage ou squelette.

Il est connu par le brevet européen 5 306 de faire passer les plaques de verre de leur support horizontal ou approximativement horizontal, par exemple leur convoyeur d'amenée, à la forme supérieure, à l'aide d'un courant de gaz sous pression soufflé sous les plaques de verre, verticalement de bas en haut. Ce courant gazeux ascendant applique les plaques de verre contre la forme supérieure avec une certaine violence, et il en résulte des marques néfastes sur la surface du verre.

En effet, la forme supérieure étant courbe, et les plaques de verre initialement planes, le premier contact n'a lieu que sur une portion réduite de surface, au centre dans la plus grande partie des cas, c'est-à-dire ceux où la forme supérieure est convexe, et les marques sont d'autant plus importantes que le contact a été plus violent et la surface de contact plus réduite.

Il est par ailleurs connu par le document de brevet français publié sous le n° 2 085 464 et par lea demande de brevet européen EP-A 241 355, appartenant à l'état de la technique visé à l'article 54 (3) CBE d'appliquer les plaques de verre contre la forme supérieure grâce à une aspiration exercée à la périphérie de la forme de bombage, ladite forme de bombage étant associée à un caisson d'aspiration. Ce mode d'application des plaques de verre évite l'inconvénient du marquage au centre des plaques de verre. En effet, les parois du caisson d'aspiration qui encadrent la forme de bombage en ménageant un espace entre elles et ladite forme de bombage pour permettre l'aspiration, aident au confinement privilégié de l'air d'aspiration sur les bords des plaques de verre. Il en résulte un accostage doux du verre contre la forme de bombage supérieure d'où une meilleure qualité de surface du verre ainsi bombé.

Cette technique donne satisfaction pour fabriquer des vitrages de courbure classique, cependant pour des courbures importantes de la forme supérieure conduisant à des vitrages fortement bombés, on peut noter après l'accostage des plaques de verre contre la forme de bombage, une application moins étroite desdites plaques contre la forme de bombage dans certaines zones, en particulier au centre, pouvant aller jusqu'au décollement de ces zones et en particulier de ce centre des plaques, vis-à-vis de la forme de bombage.

Il est aussi connu par le brevet US-A 4 386 952 d'aspirer des plaques de verre à l'aide d'une forme supérieure percée de trous aux travers desquels s'exerce l'aspiration, puis de favoriser l'application des bords des plaques de verre contre cette forme à l'aide de courants de gaz obliques dispensés par des moyens de soufflage disposés à l'extérieur de la périphérie des plaques de verre. Mais ces moyens de soufflage n'agissent que sur les bords du verre, n'ont aucune action au centre et ne seraient pas adaptés au cas de formes supérieures à aspiration périphérique, grâce auxquelles le confinement de l'air est important à la périphérie et pour lesquelles des moyens supplémentaires aidant au placage des portions périphériques des plaques contre ladite forme supérieure, ne sont pas justifiés.

Par ailleurs, il est connu de EP-A 169 770 un procédé de bombage consistant à appliquer la feuille de verre contre une forme supérieure de bombage, non par aspiration, mais par soufflage d'un courant d'air chaud ascendant. Ce procédé présente par rapport aux procédés précédemment décrits l'avantage d'un meilleur soutien de la face inférieure de la feuille de verre, mais là encore au début du processus d'application, la partie centrale de la feuille de verre a tendance à frotter contre la forme supérieure convexe, ce qui peut entraîner des défauts optiques.

La présente invention vise à remédier aux inconvénients des techniques antérieures, en vue d'obtenir une meilleure qualité du verre bombé, en vue également de permettre la fabrication de vitrages bombés suivant des formes complexes et/ou profondes, avec une maîtrise totale du bombage en chaque zone du vitrage.

Elle propose pour cela un procédé de bombage dans lequel des plaques de verre disponibles en position horizontale ou approximativement horizontale sur un support tel un convoyeur d'amenée sont appliquées contre une forme de bombage supérieure disposée au-dessus et associée à un caisson d'aspiration dont les parois encadrent ladite forme en ménageant un espace entre elles et la forme pour permettre à l'aspiration de s'exercer, puis déposées sur une forme de bombage inférieure, du type cadre à profil courbe ouvert en son centre, sur laquelle elles s'affaissent, caractérisé en ce qu'après la prise en charge d'une plaque de verre par la forme supérieure, on souffle sous ladite plaque de verre un courant gazeux ascendant vertical destiné notamment à améliorer l'application de certaines zones de la plaque de verre contre la forme supérieure.

Avantageusement, ce soufflage ascendant est un soufflage différenciable, suivant les différentes zones des plaques de verre, c'est-à-dire que la pression de soufflage est ajustable indépendamment dans les différentes zones, de façon à adapter l'effet à chaque zone.

A titre d'exemple la différentiation peut s'opérer entre le centre et la périphérie des plaques de verre.

Les pressions de soufflage peuvent varier d'une valeur nulle, ou faible de l'ordre de 5 mm de colonne d'eau (CE) à des valeurs plus importantes qui peuvent atteindre 50 à 60 mm CE et même 80 à 100 mm CE.

Avantageusement, lorsque les plaques de verre sont déposées ensuite sur une forme de bombage inférieure constituée par un anneau ou cadre ouvert en son centre, la pression de soufflage s'exerce encore mais à une valeur réduite de l'ordre de 5 à 30 mm CE, et de préférence de l'ordre de 5 à 15 mm CE, au moment de la dépose des plaques de verre sur la forme inférieure, et/ou ensuite pendant la période d'affaissement du verre sur la forme de bombage inférieure.

L'invention propose également un dispositif pour mettre en oeuvre le procédé, ce dispositif étant défini dans la revendication 8.

L'invention sera maintenant décrite plus en détail en référence aux figures jointes qui représentent :

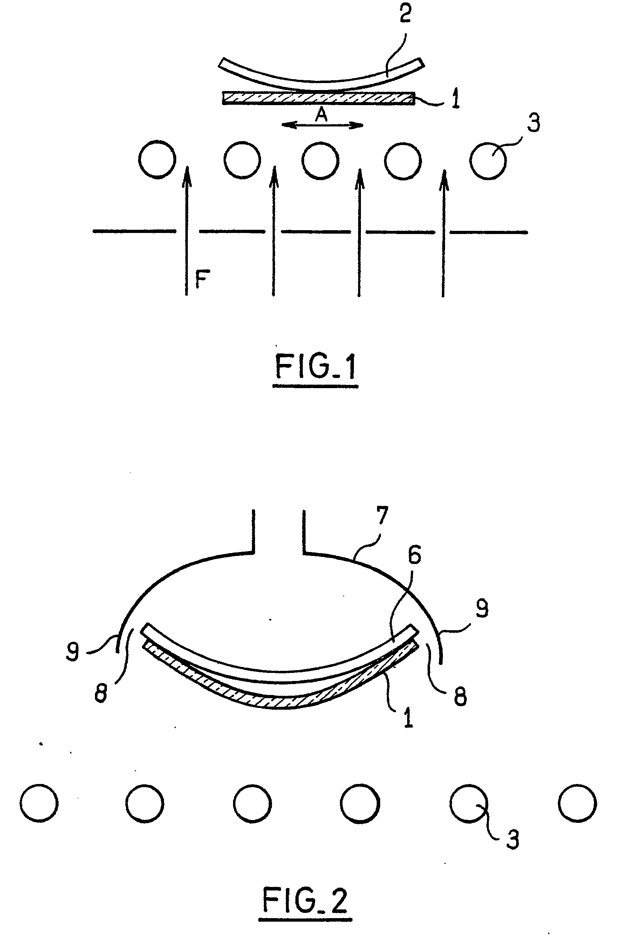

. figure 1 : une illustration du défaut constaté au centre des plaques de verre appliquées contre la forme supérieure par un courant gazeux ascendant.

. figure 2 : une illustration de la tendance au décollement du centre des plaques de verre lorsque l'application contre la forme de bombage résulte d'une aspiration à la périphérie de la forme de bombage.

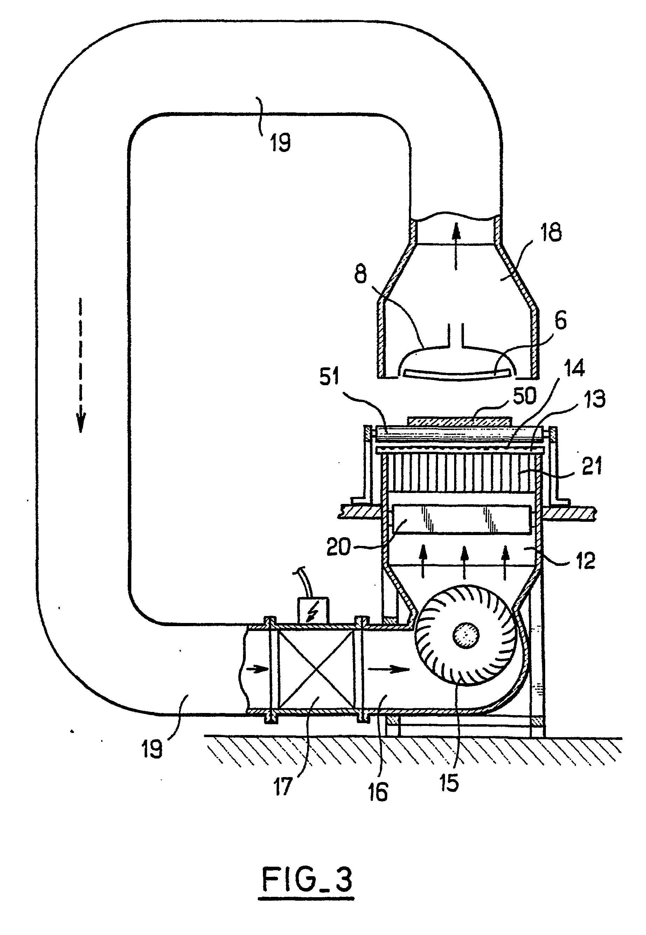

. figure 3 : un schéma de l'installation pour mettre en oeuvre le procédé de l'invention

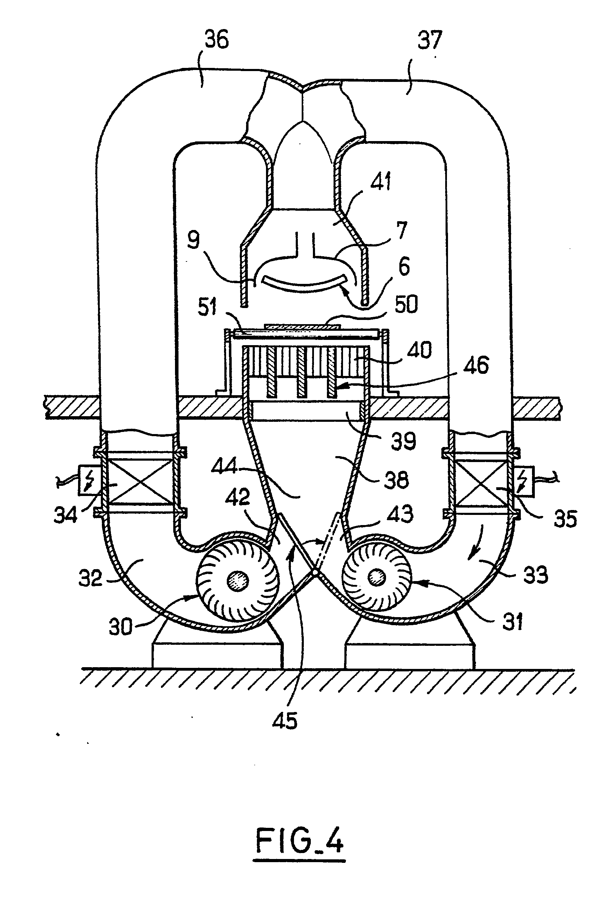

. figure 4 : un schéma d'une installation améliorée pour mettre en oeuvre le procédé de l'invention.

La figure 1 illustre le défaut constaté en appliquant la technique décrite dans le brevet européen 5 306, c'est-à-dire en amenant une plaque de verre 1 en contact avec une forme de bombage supérieure 2 à l'aide d'un courant gazeux ascendant s'exerçant sous la plaque de verre 1, courant gazeux figuré par les flèches F disposées entre les rouleaux 3 qui portaient initialement le verre avant son envol. La zone de la plaque de verre 1 sur laquelle on relève des défauts de surface est la zone centrale A.

La figure 2 illustre l'autre inconvénient que l'on risque de constater lorsqu'on applique l'autre technique déjà évoquée, c'est-à-dire celle dans laquelle une forme de bombage supérieure 6 est associée à un caisson d'aspiration 7 et dans laquelle la plaque de verre 1 est amenée au contact de cette forme supérieure 6 par la dépression qui s'exerce à la périphérie de ladite forme 6, dans l'espace 8 ménagé entre les parois latérales 9 du caisson d'aspiration 7 et la forme de bombage 6.

Cette technique procure un confinement de l'aspiration sur les bords des plaques de verre 1 et donc une certaine auto-régulation de l'aspiration qui évite les défauts constatés avec la technique précédente. Mais en particulier si la forme de bombage 6 présente une convexité prononcée, risque au contraire d'apparaître un décollement des plaques de verre 1 vis à vis de la forme 6, dans certaines zones, en particulier en leur centre.

L'invention consiste essentiellement en mettant en oeuvre la technique illustrée par cette figure 2, à apporter un soutien supplémentaire au verre déjà plaqué contre la forme supérieure, dans les régions où il aurait tendance à se déformer d'une façon indésirable, en particulier à se décoller de la forme supérieure, notamment en son centre.

On prévoit alors un soufflage vertical ascendant de gaz chaud, sous la plaque de verre. Ce courant de gaz chaud est fourni par une enceinte 12 de gaz sous pression dont la cloison supérieure 13 disposée sous les rouleaux 3 est munie d'une pluralité de sorties 14 par où s'échappent des jets de gaz. Cette enceinte fait partie d'un ensemble de soufflerie comprenant essentiellement un ventilateur 15, un canal 16 d'alimentation du ventilateur 15, des moyens électriques 17 de chauffage disposés en tête du canal d'alimentation 16 pour chauffer le courant de gaz à température nécessaire, de 650°C environ pour du verre, une hotte de récupération du gaz chaud soufflé disposée au dessus de la forme de bombage supérieure 6, une conduite 19 de recyclage reliant la hotte 18 au canal d'alimentation 16, des volets mobiles 20 grâce auxquels on peut modifier le débit de gaz soufflé, des déflecteurs verticaux 21 qui servent à régulariser l'écoulement du gaz.

Par réglage du régime des ventilateurs 15, et/ou en jouant sur la position des volets 20, la vitesse d'écoulement du gaz chaud, notamment de l'air, peut être réglée de façon à faire régner sous les plaques de verre dans des zones désirées de leur surface, la pression souhaitée.

Compte tenu des fréquents fonctionnements à des pressions alternativement élevées pouvant atteindre et même dépasser les 500 à 600 Pa (50 à 60 mm CE) et alternativement basses autour de 50 à 60 Pa (5 à 15 mm CE), il peut être avantageux d'utiliser l'installation de soufflerie montrée figure 4 dans laquelle un double circuit de soufflage est prévu pour agir sous les plaques de verre, la mise en action de l'un à la place de l'autre étant obtenue par le simple basculement d'un volet.

Selon ce mode de réalisation illustré par la figure 4, deux ventilateurs 30 et 31, par exemple à flux transversal, de puissances différentes sont prévus, chacun ayant son propre canal d'alimentation 32, 33, ses propres moyens de chauffage de l'air 34, 35, son propre circuit de recyclage 36, 37. Cependant, subsiste un enceinte sous pression 38 unique avec ses volets 39 et ses déflecteurs 40, une hotte d'aspiration 41 unique au dessus du poste de bombage.

Les sorties respectives 42 et 43 de chaque ventilateur 30, 31 débouchent dans un canal d'écoulement commun 44 aboutissant à l'enceinte 38 et un volet 45 basculant met la sortie de l'un ou l'autre des deux ventilateurs 30, 31 en communication avec ce canal commun 44. La sortie de la hotte commune 41 se subdivise en chacun des deux circuits de recyclage 36 et 37. Ainsi chacun des deux ventilateurs tourne à sa vitesse et est apte à délivrer un courant gazeux correspondant à cette vitesse, le basculement du volet 45 permettant de choisir le courant gazeux désiré soit le plus faible, soit le plus fort, adapté à l'étape du procédé.

En outre, des modulations de puissance du courant gazeux autour de la puissance de base peuvent être obtenues en agissant sur les volets 39 et les déflecteurs 40.

En outre encore, des cloisons verticales 46, à l'intérieur de l'enceinte 38 permettent de subdiviser le courant gazeux fourni en une pluralité de courants accolés, mais ayant des puissances séparément réglées par action sur les volets 39 situés à l'intérieur de chaque subdivision.

Ainsi on peut choisir d'affecter un courant gazeux d'une puissance déterminée réglable, à une zone déterminée des plaques de verre.

Le système fonctionne de la manière suivante : Une plaque de verre 50 arrive sur le convoyeur à rouleaux 51 disposé sous la forme de bombage supérieure 6 illustrée à la figure 2. Une dépression étant appliquée dans le caisson d'aspiration 7 associé à cette forme 6, et éventuellement l'ensemble forme 6 et caisson 7 descendant, la plaque de verre 50 est prise en charge par ladite forme 6.

Du fait de l'aspiration à la périphérie, du prolongement des parois latérales 9 du caisson 7 sur les côtés de la forme 6 et/ou du fait de déflecteurs, non figurés, qui à la manière des prolongements des parois latérales 9 canalisent l'aspiration, l'accostage de la plaque de verre sur la forme de bombage supérieure 6 se fait en douceur.

Ensuite, pour éviter une déformation non désirée de cette plaque de verre, du fait de décollements dans certaines régions, notamment au centre, le soufflage ascendant, vertical sous la plaque de verre est mis en oeuvre soit sous la totalité de la surface de ladite plaque, à une pression unique ou avec des pressions différentes suivant les zones, soit uniquement suivant des zones limitées de la surface, par exemple uniquement au centre en utilisant la possibilité qui est offerte de subdiviser le courant gazeux et de moduler sa puissance. Dans cette phase du procédé, c'est généralement une puissance de soufflage relativement élevée qui est nécessaire, c'est-à-dire de l'ordre de 500 à 600 Pa (50 à 60 mm CE). En conséquence, la vitesse du ventilateur unique 15 est adaptée ou dans le cas où deux ventilateurs 30, 31 sont disponibles, le volet 45 est basculé pour utiliser le courant gazeux fourni par le ventilateur le plus puissant.

On réalise ainsi un véritable pressage pneumatique avec des pressions de pressage pouvant être variables suivant les zones de la plaque de verre.

Ce pressage par le courant gazeux inférieur peut être combiné avec des aspirations au travers de la forme supérieure dans certaines régions comme cela est prévu dans le brevet français déjà cité n° 2 085 464.

Ensuite, le bombage ou le prébombage contre la forme supérieure étant réalisé, la plaque de verre 50 est déposée sur un chariot d'évacuation éventuellement équipé d'une forme de bombage inférieure tel un cadre à profil courbe, ouvert en son centre. Pendant la descente de la plaque de verre, un courant gazeux ascendant peut à nouveau être soufflé, généralement avec une puissance plus faible de l'ordre de 50 à 150 Pa (5 à 30 mm CE) et de préférence de l'ordre de 50 à 300 Pa (5 à 15 mm CE). Dans ce cas, lorsque la possibilité en est offerte, le volet 45 est basculé, mettant ainsi le ventilateur plus faible en communication avec l'enceinte 38. Dans le cas où il n'existe qu'un seul ventilateur 15, sa vitesse de rotation est réglée.

Grâce à ce soufflage, la descente du verre est moins brutale, on évite le rebondissement néfaste de la plaque de verre sur la forme supérieure ou sur le chariot d'évacuation, on facilite le glissement de la plaque de verre le long d'éventuels guides des positionnement associés à cette forme inférieure ou à ce chariot.

Il en résulte l'absence de défauts sur le verre et un meilleur positionnement des plaques de verre. Dans la mesure où le bombage se poursuit sur la forme inférieure en forme de cadre, un soufflage inférieur peut encore être continué pour contrôler l'affaissement du verre dans les zones non soutenues par le cadre. Là encore, le soufflage peut encore être modulé en puissance, et/ou différencié suivant les zones. Il peut même être supprimé dans certaines zones.

Bien entendu, tous les soufflages évoqués précédemment peuvent être pratiqués en cours d'une même opération de bombage, ou au contraire certains d'entre eux seulement peuvent être déclenchés.

Ensuite, la plaque de verre est acheminée vers le poste de travail suivant, par exemple un poste de trempe ou un poste de recuisson.

Bien entendu, le bombage tel que décrit est réalisable sur une plaque de verre constituée d'une feuille unique de verre, ou d'un empilement de feuilles de verre ou autre.

L'invention permet d'obtenir des plaques de verre bombées exemptes de défauts, et pouvant présenter des courbures complexes multiples et/ou accentuées.

Nous avons indiqué que les pressions de soufflage pouvaient être différenciées suivant les zones des plaques de verre, par exemple entre le centre et la périphérie, bien entendu des différenciations suivant d'autres zones sont possibles.

## Revendications

1. Procédé de bombage de plaques de verre (50) dans lequel des plaques de verre disponibles en position horizontale ou approximativement horizontale sur un support tel un convoyeur d'amenée (51) sont appliquées contre une forme de bombage supérieure (6) disposée au-dessus et associée à un caisson d'aspiration (7) dont les parois encadrent ladite forme en ménageant un espace entre elles et la forme pour permettre à l'aspiration de s'exercer, puis déposées sur une forme de bombage inférieure, du type cadre à profil courbe ouvert en son centre, sur laquelle elles s'affaissent, caractérisé en ce qu'après la prise en charge d'une plaque de verre par la forme supérieure, on souffle sous ladite plaque de verre un courant gazeux ascendant vertical destiné notamment à améliorer l'application de certaines zones de la plaque de verre contre la forme supérieure.

2. Procédé selon la revendication 1, caractérisé en ce que la pression du soufflage inférieure est différenciable en puissance suivant les zones des plaques de verre (50), en particulier un soufflage différent est pratiqué au centre et à la périphérie desdites plaques de verre.

3. Procédé selon l'une des revendications précédentes, caractérisé en ce que les pressions de soufflage s'échelonnent entre des valeurs nulles ou faibles de l'ordre de 50 Pa (5 mm CE) à des valeurs élevées de l'ordre de 500 à 600 Pa (50 à 60 mm CE) et même atteignant 800 à 1000 Pa (80 à 100 mm CE).

4. Procédé selon l'une des revendications précédentes, caractérisé en ce qu'on poursuit le soufflage lorsque les plaques de verre (50) sont lâchées par la forme de bombage supérieure (6) et déposées sur la forme de bombage inférieure du type cadre à profil courbe ouvert en son centre, placée sur un chariot d'évacuation.

5. Procédé selon la revendication 4, caractérisé en ce que les pressions de soufflage pratiquées pendant la dépose du verre sur le cadre, sont de l'ordre de 50 à 300 Pa (5 à 30 mm CE) et de préférence de l'ordre de 50 à 150 Pa (5 à 15 mm CE).

6. Procédé selon l'une des revendications précédentes, caractérisé en ce qu'on poursuit le soufflage inférieur ascendant après que les plaques de verre (50) aient été déposées sur le cadre de bombage, les pressions étant de l'ordre de 50 à 300 Pa (5 à 30 mm CE) et de préférence de l'ordre de 50 à 150 Pa (5 à 15 mm CE).

7. Procédé selon la revendication 6, caractérisé en ce que le soufflage est exercé au centre des plaques de verre (50), non soutenu par le cadre.

8. Dispositif pour la mise en oeuvre du procédé selon les revendications précédentes, comportant un poste de bombage équipé d'une forme de bombage supérieure (6) associée à un caisson d'aspiration (7) dont les parois latérales encadrent ladite forme de bombage à une certaine distance de façon à ménager un espace pour que s'exerce l'aspiration destinée à la prise en charge de plaques de verre (50) par la forme de bombage supérieure et à leur maintien par ladite forme, caractérisé en ce qu'il comporte une enceinte (12) de gaz chaud sous pression capable de souffler verticalement ce gaz sous les plaques de verre après qu'elles aient été prises en charge par la forme de bombage supérieure.

9. Dispositif selon la revendication 8, caractérisé en ce que l'enceinte (12) de gaz sous pression appartient à un ensemble de soufflerie ayant au moins un ventilateur (15; 30, 31), des moyens de réchauffage (17; 34, 35) du gaz soufflé, une hotte (18; 41) de récupération, un circuit de recyclage (19; 36, 37), volets (20; 39) et des déflecteurs (21; 40) de réglage.

10. Dispositif selon l'une des revendications 8 ou 9, caractérisé en ce que les puissances de soufflage sont variables.

11. Dispositif selon l'une des revendications 8 à 10, caractérisé en ce que des cloisons verticales (46) de subdivision du courant gazeux émis sont prévues, permettant ainsi, grâce aux volets (39) et déflecteurs (40), de différencier le soufflage suivant différentes zones des plaques de verre (50).

12. Dispositif selon l'une des revendications 8 à 11, caractérisé en ce que l'enceinte (12) de gaz chaud sous pression est située sous les rouleaux du convoyeur (51) amenant les plaques de verre (50) à bomber dans le poste de bombage.

## Patentansprüche

1. Verfahren zum Wölben von Glasscheiben (50), bei dem die Glasscheiben, die in horizontaler Lage oder in annähernd horizontaler Lage auf einer Auflage, wie etwa einem Zuführförderer (51) verfügbar sind, gegen eine obenliegende Bombage-Form (6) gedrückt werden, die einem Ansaugkasten (7) zugeordnet ist, dessen Seitenwände diese Form derart einrahmen, daß zwischen ihnen und der Form ein Zwischenraum für den Ansaugvorgang freibleibt, und sie dann auf eine untere Bombage-Form des Typs eines gewölbten, in der Mitte offenen Profilrahmens gelegt werden, an dem sie sich anschmiegt, dadurch gekennzeichnet, daß man nach Beschicken der oberen Form mit einer Glasscheibe einen vertikal aufsteigenden Gasstrom, der insbesondere zur Verbesserung des Andrucks von bestimmten Zonen der Glasscheiben an die obere Form bestimmt ist, unter diese Glasscheibe bläst.

2. Verfahren nach Anspruch 1, dadurch gekennzeichnet, daß der Blasdruck von unten in der Stärke bezüglich der Zonen der Glasscheibe (50) veränderlich ist, insbesondere ein unterschiedlicher Blasdruck in der Mitte und am Umfang der Glasscheiben angewendet wird.

3. Verfahren nach einem der vorhergehenden Ansprüche, dadurch gekennzeichnet, daß sich die Blasdrücke zwischen Null oder schwachen Werten im Bereich von 50 Pa (5 mm WS) bis zu höheren Werten im Bereich von 500 bis 600 Pa (50 bis 60 mm WS) verteilen und 800 bis 1000 Pa (80 bis 100 mm WS) erreichen.

4. Verfahren nach einem der vorhergehenden Ansprüche, dadurch gekennzeichnet, daß das Blasen fortgesetzt wird, wenn die Glasscheiben (50) von der oberen Bombage-Form (6) losgelassen und auf der unteren Bombage-Form des Typs eines gewölbten, in der Mitte offenen Profilrahmens auf einem Gestell zum Evakuieren abgelegt werden.

5. Verfahren nach Anspruch 4, dadurch gekennzeichnet, daß die während des Ablegens des Glases auf dem Rahmen angewandten Blasdrücke im Bereich von 50 bis 300 Pa (5 bis 30 mm WS) und vorzugsweise im Bereich von 50 bis 150 Pa (5 bis 15 mm WS) liegen.

6. Verfahren nach einem der vorhergehenden Ansprüche, dadurch gekennzeichnet, daß das Anblasen von unten nach oben fortgesetzt wird, nachdem die Glasscheiben (50) auf dem Bombage-Gestell abgelegt worden sind, wobei die Druckwerte im Bereich von 50 bis 300 Pa (5 bis 30 mm WS) und vorzugsweise im Bereich von 50 bis 150 Pa (5 bis 15 mm WS) liegen.

7. Verfahren nach Anspruch 6, dadurch gekennzeichnet, daß das Blasen in der nicht von dem Rahmen gestützten Mitte der Glasscheiben (50) durchgeführt wird.

8. Vorrichtung zur Durchführung des Verfahrens nach den vorhergehenden Ansprüchen, mit einer Bombage-Station, die mit einer oberen Bombage-Form (6) ausgestattet ist, die mit einem Ansaugschacht (7) verbunden ist, dessen Seitenwände die Bombage-Form in einem bestimmten Abstand einrahmen, so daß ein Ansaugzwischenraum entsteht, um die obere Bombage-Form mit den Glasplatten (50) zu beschicken und sie gegen die Form zu halten, dadurch gekennzeichnet, daß die Vorrichtung ein Gehäuse (12) für erwärmtes unter Druck stehendes Gas aufweist, um das Gas vertikal unter die Glasscheiben zu blasen, nachdem diese von der oberen Bombage-Form aufgenommen worden sind.

9. Vorrichtung nach Anspruch 8, dadurch gekennzeichnet, daß das Druckgasgehäuse (12) zu einer Blaseinheit mit einer Ventilatoreinrichtung (15; 30, 31), Heizvorrichtungen (17; 34, 35) für das Blasgas, einer Haube (18; 41) zur Rückgewinnung, einem Recyclingkreislauf (19: 36, 37), Klappen (20; 39) und Regulierdeflektoren (21; 40) gehört.

10. Vorrichtung nach einem der Ansprüche 8 oder 9, dadurch gekennzeichnet, daß die Blasdruckwerte variabel sind.

11. Vorrichtung nach einem der Ansprüche 8 bis 10, dadurch gekennzeichnet, daß zur Unterteilung des abgegebenen Gasstroms vertikale Zwischenwände (46) vorgesehen sind, die durch Klappen (39) und Deflektoren (40) eine Änderung des Anblasvorgangs gemäß unterschiedlicher Zonen der Glasscheiben (50) ermöglichen.

12. Vorrichtung nach einem der Ansprüche 8 bis 11, dadurch gekennzeichnet, daß das Gehäuse (12) für das erwärmte unter Druck stehende Gas unter den Rollen der Fördereinrichtung (31), die die Glasscheiben (50) zum Wölben zum Bombage-Stand mitnimmt, angeordnet ist.

## Claims

1. A method of bending plates of glass (50), in which the glass plates, available in a horizontal or approximately horizontal position on a support such as a feed conveyer (51), are applied against an upper bending mould (6) disposed above and associated with a suction chest (7), the walls of which frame said mould leaving a space between themselves and the mould to allow the suction to take place, and are then deposited onto a lower bending mould, of the frame type having a curved profile and open at its centre, on which they settle down, characterized in that, after a glass plate has been taken over by the upper mould, there is blown against said glass plate a vertical, ascending gaseous current intended, notably, for improving the application of certain zones of the glass plate against the upper mould.

2. A method according to claim 1, characterized in that the lower blowing pressure can be differentiated in power according to the zones of the glass plates (50), in particular a different blowing is carried out at the centre and at the periphery of said glass plates.

3. A method according to one of the preceding claims, characterized in that the blowing pressures range between zero or small values of the order of 50 Pa (5 mm w.g.) to high values of the order of 500 to 600 Pa (50 to 60 mm w.g.) and even reach 800 to 1,000 Pa (80 to 100 mm w.g.).

4. A method according to one of the preceding claims, characterized in that the blowing is continued when the glass plates (50) are released by the upper bending mould (6) and are deposited on the lower bending mould of the frame type having a curved profile open at its centre, placed on a removal carriage.

5. A method according to claim 4, characterized in that the blowing pressures used during the depositing of the glass onto the frame are of the order of 50 to 300 Pa (5 to 30 mm w.g.) and preferably of the order of 50 to 150 Pa (5 to 15 mm w.g.).

6. A method according to one of the preceding claims, characterized in that the ascending lower blowing is continued after the glass plates (50) have been deposited on the bending frame, the pressures being of the order of 50 to 300 Pa (5 to 30 mm w.g.) and preferably of the order of 50 to 150 Pa (5 to 15 mm w.g.).

7. A method according to claim 6, characterized in that the blowing is carried out at the centre of the glass plates (50) not supported by the frame.

8. Apparatus for carrying out the method according to the preceding claims, comprising a bending station equipped with an upper bending mould (6) associated with a suction chest (7), the lateral walls of which frame said bending mould at a certain distance in such a way as to form a space so that the suction intended for the taking over of glass plates (50) by the upper bending mould and for supporting them by said mould may be exerted, characterized in that the apparatus comprises an enclosure (12) for hot gas under pressure capable of blowing this gas vertically beneath the glass plates after they have been taken over by the upper bending mould.

9. Apparatus according to claim 8, characterized in that the enclosure (12) for gas under pressure forms part of a blowing assembly having at least one blower (15; 30, 31), heating means (17; 34, 35) for the blown gas, a collecting hood (18; 41), a recycling circuit (19; 36, 37), dampers (20; 39) and regulating deflectors (21; 40).

10. Apparatus according to one of claims 8 or 9, characterized in that the blowing powers can be varied.

11. Apparatus according to one of claims 8 to 10, characterized in that vertical partitions (46) for subdividing the gaseous current emitted are provided, thus making possible, by means of the dampers (39) and deflectors (40), to vary the blowing according to different zones of the glass plates (50).

12. Apparatus according to one of claims 8 to 11, characterized in that the enclosure (12) for hot gas under pressure is situated below the rollers of the conveyer (51) bringing the glass plates (50) to be bent into the bending station.

FIG.1

FIG.2

FIG_3

FIG.4